# EUROPEAN PATENT APPLICATION

(11) **EP 2 594 989 A1**
(43) Date of publication of application: **22.05.2013**
(21) Application number: 11806685.1
(22) Date of filing: 07.07.2011
(51) Int. Cl.: G02F 1/167, G09F 9/37, G09G 3/34

(54) **ELECTROMIGRATION DISPLAY DEVICE AND DRIVE METHOD THEREOF**

(30) Priority: 06.07.2011 JP 2011150321; 14.07.2010 JP 2010159907
(71) Applicant: Mitsubishi Pencil Co., Ltd., Tokyo 140-8537 (JP)
(72) Inventor: YAMADA, Shinichi, Yokohama-shi Kanagawa 221-8550 (JP)
(74) Representative: Vossius & Partner
(86) International application number: PCT/JP2011/065593
(87) International publication number: WO 2012/008355

(57) **Abstract**

The present invention is intended to minimize the occurrence of a kickback phenomenon, suppress degradation of contrast, suppress coagulation of charged particles to a minimum and suppress degradation of display quality. An electrophoresis display apparatus (1) is provided with a pair of substrates (6, 7), a plurality of pixel electrodes (9) formed on the substrate surface of one substrate (6), a common electrode (10) formed opposite to the plurality of pixel electrodes (9) on the substrate surface of the other substrate (7), a liquid body (14) in which two charged particles (11, 12) having different colors and polarities sealed and dispersed between the pair of substrates, and a controller (4) that generates a write pulse to generate a potential difference for causing the charged particles (11, 12) to move between the pixel electrode (9) and the common electrode (10). The controller (4) applies a write pulse to the pixel electrode (9) and the common electrode (10), and then connects the pixel electrode (9) and the common electrode (10) via a resistance (17).

## Description

### Technical Field

The present invention relates to an electrophoresis display apparatus and a drive method thereof that applies an electric field to charged particles and reversibly changes their visually recognized states.

### Background Art

In recent years, in line with the development of information devices, there is a growing demand for display apparatuses with lower power consumption, thinner profile and higher flexibility or the like. One of display apparatuses that respond to such a demand is an electrophoresis display apparatus. A display panel provided for the electrophoresis display apparatus is provided with two substrates arranged opposite to each other via a spacer, at least one of which being transparent, a pixel electrode disposed on one substrate, a common electrode disposed on the other substrate, and a display liquid in which positively or negatively charged and differently colored particles are dispersed in a dispersion medium, and charged between the substrate electrodes. A desired display can be obtained by applying an electric field between the substrate electrodes of the display panel (e.g., see Patent Literature 1).

Such an electrophoresis display apparatus is driven by a driver. In a segment drive scheme that displays numerals or the like, a high-voltage driver is used. When high definition quality is required, for example, in electronic books, a switching element such as a TFT is used as their driver. However, in all cases, after applying a write voltage over a predetermined period, the pixel electrode and the common electrode are often short-circuited to the same potential. For this reason, charged particles (electrophoresis particles) moved toward each electrode by the short-circuiting operation are pulled back toward the center in the thickness direction of the display panel, that is, a kickback phenomenon occurs, resulting in a problem that the contrast deteriorates and visibility degrades.

Therefore, an electrophoresis display apparatus that prevents the above-described kickback phenomenon is proposed (e.g., see Patent Literature 2). In this electrophoresis display apparatus, an electrophoresis dispersion liquid is charged into a gap between a pixel electrode formed on a first substrate (element substrate) and a common electrode formed on a second substrate (opposite substrate) and an insulating coat is formed on the surface on the electrophoresis dispersion liquid side of the pixel electrode or common electrode.

Furthermore, an electro-optical apparatus that does not short-circuit a pixel electrode and a common electrode after a write operation and maintains a potential difference between the pixel electrode and the common electrode is also proposed (e.g., see Patent Literature 3). This electro-optical apparatus (electrophoresis display apparatus) applies an off voltage to a switching element after the write operation, performs high impedance processing and maintains a condition in which both the pixel electrode and common electrode are charged with electrophoresis particles.

### Citation List

### Patent Literature

Patent Literature 1: US Patent No.3612758 Specification
Patent Literature 2: Japanese Patent Application Laid-Open No.2003-140199
Patent Literature 3: Japanese Patent Application Laid-Open No.2004-102054

### Summary of Invention

### Technical Problem

However, the technique described in Patent Literature 2 can prevent a kickback phenomenon only when it is provided with an insulating coat, whereas the technique cannot prevent a kickback phenomenon which occurs when it is not provided any insulating coat. On the other hand, the technique described in Patent Literature 3 maintains a potential difference between the pixel electrode and the common electrode without short-circuiting the pixel electrode and the common electrode after a writing to prevent a kickback phenomenon, which results in a problem of coagulation in which charged particles are coupled together, causing the display quality to deteriorate.

The present invention has been implemented in view of the above-described problems and it is an object of the present invention to provide an electrophoresis display apparatus and a drive method thereof capable of minimizing a kickback phenomenon, suppressing contrast deterioration, minimizing coagulation of charged particles and suppressing degradation of display quality.

### Solution to Problem

An electrophoresis display apparatus according to the present invention includes: a pair of substrates arranged opposite to each other via a space, at least one of which has optical transparency; a plurality of pixel electrodes formed on a substrate surface of one of the pair of substrates; one or a plurality of common electrodes formed opposite to the plurality of pixel electrodes on the substrate surface of the other of the pair of substrates; a liquid body composed of two types of dispersed charged particles differing in color and polarity sealed in between the pair of substrates; and a drive control circuit that generates a write pulse producing a potential difference that causes the charged particles to move between the pixel electrode and the common electrode, in which after applying a write pulse to the pixel electrode and the common electrode, the drive control circuit connects the pixel electrode and the common electrode via a resistance.

According to this configuration, after the application of a write pulse, the pixel electrode and the common electrode are connected together via a resistance, and it is thereby possible to minimize the occurrence of a kickback phenomenon and coagulation of charged particles, and suppress degradation of contrast and degradation of display quality.

In the above-described electrophoresis display apparatus, the resistance value of the resistance is preferably 0.5 times to 10 times the resistance value of the liquid body.

A method for driving an electrophoresis display apparatus according to the present invention is a method for driving an electrophoresis display apparatus, the apparatus including: a pair of substrates arranged opposite to each other via a space, at least one of which has optical transparency; a plurality of pixel electrodes formed on a substrate surface of one of the pair of substrates; a common electrode formed opposite to the plurality of pixel electrodes on the substrate surface of the other of the pair of substrates; a liquid body composed of two types of dispersed charged particles differing in color and polarity sealed in between the pair of substrates; and a drive control circuit that generates a write pulse producing a potential difference that causes the charged particles to move between the pixel electrode and the common electrode, in which after applying a write pulse to the pixel electrode and the common electrode, the drive control circuit connects the pixel electrode and the common electrode via a resistance.

### Advantageous Effects of Invention

According to the present invention, it is possible to minimize the occurrence of a kickback phenomenon, suppress contrast deterioration, minimize coagulation of charged particles and suppress degradation of display quality.

### Brief Description of Drawings

FIG.1 is an overall block diagram of an electrophoresis display apparatus according to a first embodiment of the present invention;
FIG.2 is a circuit block diagram of a drive system provided for the electrophoresis display apparatus shown in FIG.1;
FIG.3 is an internal schematic view of a display section during a writing and after a writing of the electrophoresis display apparatus according to the present invention;
FIG.4 is an internal schematic view of the display section during a writing and after a writing of an electrophoresis display apparatus according to a comparative example;
FIG.5 is a diagram illustrating a white reflection factor, black reflection factor and contrast after a write voltage is applied according to an embodiment;
FIG.6 is a diagram illustrating a white reflection factor, black reflection factor and contrast after a write voltage is applied according to an embodiment;
FIG.7 is an overall block diagram of an electrophoresis display apparatus according to a second embodiment of the present invention;
FIG.8 is an equivalent circuit diagram illustrating an electrical configuration of pixels of the electrophoresis display apparatus according to the second embodiment;
FIG.9 is a partial cross-sectional view of the display section of the electrophoresis display apparatus according to the second embodiment;
FIG.10 is a schematic view illustrating a display of the electrophoresis display apparatus according to the second embodiment;
FIG.11 is an internal schematic view of the display section during a writing and after a writing of the electrophoresis display apparatus according to the second embodiment;
FIG.12 is an overall block diagram of an electrophoresis display apparatus according to a third embodiment of the present invention;
FIG.13 is an internal schematic view of the display section during a writing and after a writing of the electrophoresis display apparatus according to the third embodiment;
FIG.14 is an overall block diagram of an electrophoresis display apparatus according to a fourth embodiment of the present invention; and
FIG.15 is an equivalent circuit diagram illustrating an electrical configuration of pixels of the electrophoresis display apparatus according to the fourth embodiment.

### Description of Embodiments

Hereinafter, embodiments of the present invention will be described in detail with reference to the accompanying drawings.

### (First embodiment)

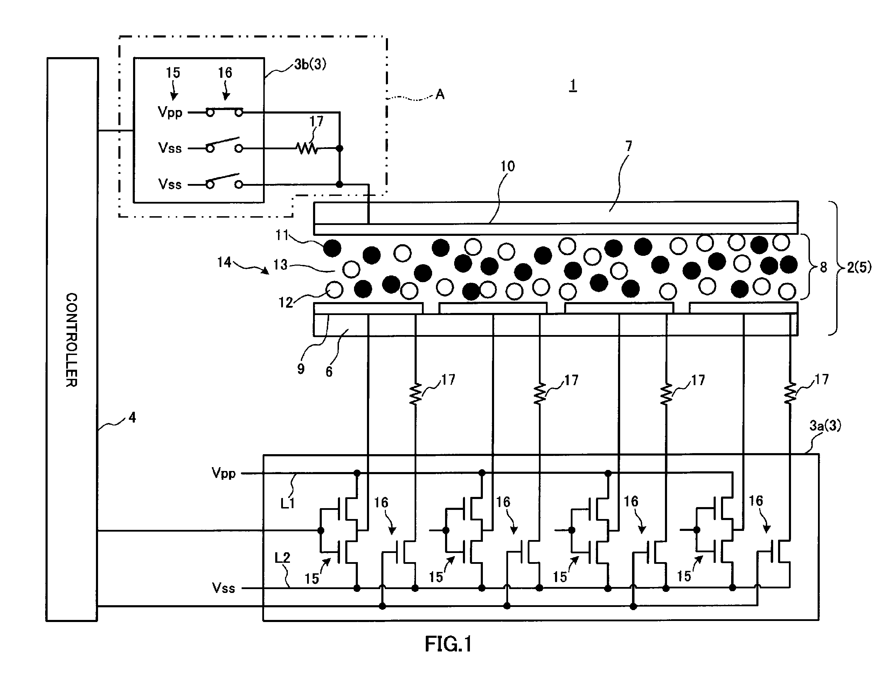

FIG.1 is a schematic view of an overall configuration of an electrophoresis display apparatus according to a first embodiment of the present invention. The electrophoresis display apparatus 1 shown in FIG.1 is provided with a display section 2, a drive circuit (3a, 3b) that drives the display section 2 and a controller 4 that controls operation of the entire apparatus. The drive circuit 3 and the controller 4 constitute drive control means.

The display section 2 constitutes pixels 5. The display section 2 is provided with an element substrate 6 and an opposite substrate 7 arranged opposite to each other via a spacer (not shown), and an electrophoresis element 8 sealed in between the substrates 6 and 7. The following description will be given assuming that an image is displayed on the opposite substrate 7 side.

The element substrate 6 is a substrate made, for example, of glass or plastic. The element substrate 6 need not particularly have high optical transparency, but a material having high optical transparency can also be used together with the opposite substrate 7. In the present embodiment, the element substrate 6 and the opposite substrate 7 are comprised of optically transparent substrates. Particularly when flexibility is required as the display apparatus, a film-like or sheet-like resin substrate may be used. A laminated structure in which a data line "X" or the like is built is formed on the element substrate 6. A plurality of pixel electrodes 9 are provided on an upper layer side of this laminated structure. When the pixel electrode 9 side is not used as the display surface as in the case of the present embodiment, a conductive material such as aluminum or copper can be used for the pixel electrodes 9.

The opposite substrate 7 is an optically transparent substrate made of, for example, glass or plastic, and polyethylene terephthalate (PET), polyether sulfone (PES), polycarbonate (PC) or the like can be used. A common electrode 10 is formed opposite to the plurality of pixel electrodes 9 on the surface of the opposite substrate 7 facing the element substrate 6. The common electrode 10 is formed of a transparent conductive material such as magnesium-silver (MgAg), indium tin oxide (ITO), indium zinc oxide (IZO).

The electrophoresis element 8 is sealed with an electrophoresis display liquid 14 composed of positively charged black color particles 11, negatively charged white color particles 12 and dispersants 13 that disperse the electrophoresis particles (black color particles 11 and white color particles 12). A composition example of the electrophoresis display liquid 14 may be as follows: carbon black containing acrylic copolymer particles for the black color particles 11, organic titanate processed titanium dioxide particles for the white color particles 12, normal-paraffin-based dispersants and charge control agents for the dispersants 13. A spacer (not shown) for keeping the gap between the substrates to a specified value is provided between the opposite substrate 7 and the element substrate 6 and sealers for sealing the gaps are provided on end faces of the substrates.

In the respective electrophoresis elements 8, when a voltage is applied between the pixel electrode 9 and the common electrode 10 so that the potential of the common electrode 10 becomes relatively higher, the positively charged black color particles 11 are attracted toward the pixel electrode 9 side by a Coulomb force and the negatively charged white color particles 12 are attracted toward the common electrode 10 side by a Coulomb force. As a result, since the white color particles 12 are concentrated on the display surface side (that is, common electrode 10 side), the color of the white color particles 12 (that is, white) is displayed on the display surface of the display section 2. On the contrary, when a voltage is applied between the pixel electrode 9 and the common electrode 10 so that the potential of the pixel electrode 9 becomes relatively higher, the negatively charged white color particles 12 are attracted toward the pixel electrode 9 side by a Coulomb force and the positively charged black color particles 11 are attracted toward the common electrode 10 side by a Coulomb force. As a result, since the black color particles 11 are concentrated on the display surface side, the color of the black color particles 11 (that is, black color) is displayed on the display surface of the display section 2. When pigments used for the white color particles 12 and the black color particles 11 are substituted by, for example, red color, green color and blue color pigments, the red color, green color, blue color or the like can be displayed.

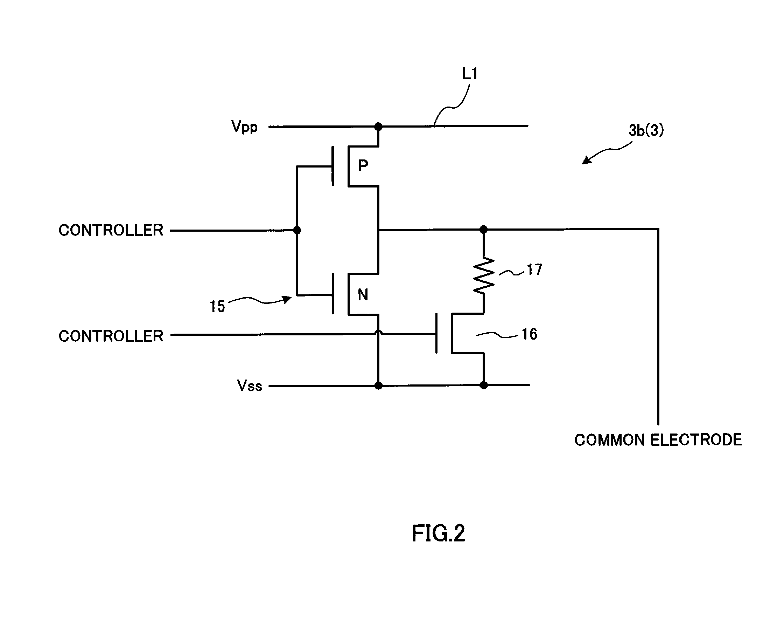

The drive circuit 3 drives and controls the display section 2 based on a timing signal (drive pulse) supplied from the controller 4. The drive circuit 3 is a high-voltage driver such as a VFD driver or PDP driver. This drive circuit 3 is provided with a drive circuit 3a that drives and controls the pixel electrode 9 and a drive circuit 3b that drives and controls the common electrode 10, and each drive circuit 3a, 3b includes a CMOS circuit (CMOSFET) 15 and a connection transistor 16 that constitutes a short switch. In the present embodiment, the drive circuit 3a that drives and controls the pixel electrode 9 is configured of a set of the CMOS circuit 15 and the connection transistor 16 provided for each pixel electrode 9. The drive circuit 3b that drives and controls the common electrode 10 is configured of a set of the single CMOS circuit 15 and connection transistor 16 for one common electrode 10. FIG.1 shows a detailed circuit configuration of only the drive circuit 3a that drives and controls the pixel electrode 9, but the drive circuit 3b that drives and controls the common electrode 10 also has a similar configuration. FIG.2 shows a more specific circuit configuration of the drive circuit 3b. FIG.1 shows a drive system "A" including the drive circuit 3b by a two-dot dashed line and FIG.2 shows a more specific circuit configuration of the drive system "A." Furthermore, the present embodiment uses a high-voltage driver such as a VFD driver or PDP driver for the drive circuit 3, but it is naturally possible to constitute the circuit using a switching element such as an FET or bipolar transistor, and the circuit can be constituted using, for example, a non-contact relay.

In the drive circuit 3a, the gate input of each CMOS circuit 15 is connected to the output of the controller 4, and the drain output of each CMOS circuit 15 is connected to the pixel electrode 9. The source side of a PMOS of each CMOS circuit 15 is connected to a power supply Vpp (e.g., 50 V) via a signal line L1 and the source side of an NMOS is connected to a power supply Vss (e.g., 0 V) via a signal line (potential line) L2. During a write operation, a drive pulse at a level different from that of a pulse given to the drive circuit 3b is given to the gate input from the controller 4. To be more specific, when an "H" level pulse signal is inputted to the gate input of the CMOS circuit 15 from the controller 4, the PMOS side is brought into conduction with the power supply Vpp and a write voltage Vpp is applied to the pixel electrode 9 from the drain output. In this case, since control is performed such that the potential of the pixel electrode 9 side becomes relatively higher, the color of the black color particles 11 is displayed on the display surface of the display section 2. On the other hand, when an "L" level pulse signal is inputted to the gate input of the CMOS circuit 15 from the controller 4, the NMOS side is brought into conduction with the power supply Vss and the write voltage Vss is applied to the pixel electrode 9 from the drain output. In this case, since control is performed such that the potential of the pixel electrode 9 side becomes relatively lower, the color of the white color particles 12 is displayed on the display surface of the display section 2.

The gate input of the connection transistor 16 is connected to the output of the controller 4, the drain side is connected to the input of the pixel electrode 9 via a resistance 17, and the source side is connected to the power supply Vss via the signal line L2. After a write operation, a control signal is given to the gate input from the controller 4, and the power supply Vss is connected to the pixel electrode 9 via the resistance 17.

On the other hand, in the drive circuit 3b, the gate input of the CMOS circuit 15 is connected to the output of the controller 4, and the drain output of the CMOS circuit 15 is connected to the input of the common electrode 10. The source side of a PMOS of the CMOS circuit 15 is connected to a power supply Vpp via a signal line L1 and the source side of an NMOS is connected to a power supply Vss via a signal line L2. During a write operation, the controller 4 gives a drive pulse different in level from the drive pulse given to the drive circuit 3a to the gate input. To be more specific, when the controller 4 inputs an "H" level drive pulse to the gate input of the CMOS circuit 15, the PMOS side is brought into conduction with the power supply Vpp and the write voltage Vpp is applied to the common electrode 10 from the drain output. In this case, since control is performed such that the potential of the common electrode 10 side becomes relatively higher, the color of the white color particles 12 is displayed on the display surface of the display section 2. On the other hand, when the controller 4 inputs an "L" level drive pulse to the gate input of the CMOS circuit 15, the NMOS side is brought into conduction with the power supply Vss and the write voltage Vss is applied to the common electrode 10 from the drain output. In this case, since control is performed such that the potential of the common electrode 10 side becomes relatively lower, the color of the black color particles 11 is displayed on the display surface of the display section 2.

The gate input of the connection transistor 16 provided for the drive circuit 3b is connected to the output of the controller 4, the drain side is connected to the common electrode 10 via the resistance 17 and the source side is connected to the power supply Vss via the signal line L2. After the write operation, a control signal is given to the gate input from the controller 4 and the power supply Vss is connected to the common electrode 10 via the resistance 17.

The controller 4 supplies a timing signal such as a clock signal, start pulse, drive pulse to the drive circuit 3a and the drive circuit 3b to control the operation of each circuit. More specifically, during a write operation, the controller 4 drives the connection transistor 16 to an open state, gives different pulses of "H" and "L" levels to the gate inputs of the CMOS circuits 15 of the drive circuit 3a and the drive circuit 3b respectively and applies a write voltage to the pixel electrode 9 and the common electrode 10. On the other hand, after the write operation, the controller 4 drives the CMOS circuit 15 to an open state, gives control signals to the gate inputs of the connection transistors 16 of the drive circuit 3a and the drive circuit 3b respectively, brings the connection transistors 16 into conduction and connects the pixel electrode 9 and the common electrode 10 to the power supply Vss via the resistance 17. That is, after the write operation, the common electrode 10 and the pixel electrode 9 are electrically connected together via the resistance 17.

Here, the resistance value of the resistance 17 is preferably 0.5 to 10 times or more preferably 2 to 6 times the resistance value of the electrophoresis display liquid (liquid body) 14 for the area corresponding to the pixel 5 from the standpoint of a white reflection factor, black reflection factor, contrast and the presence/absence of coagulation.

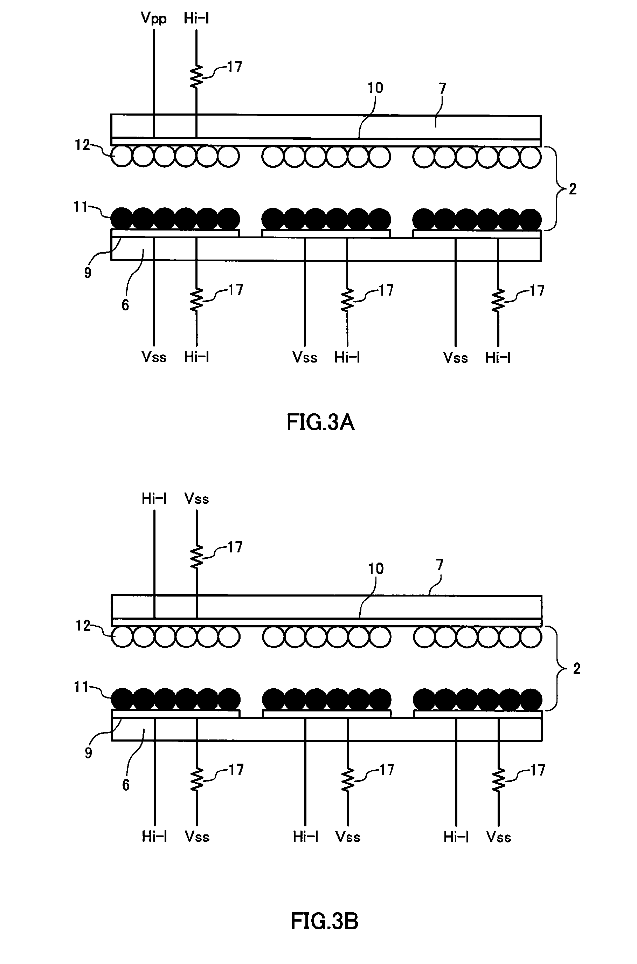

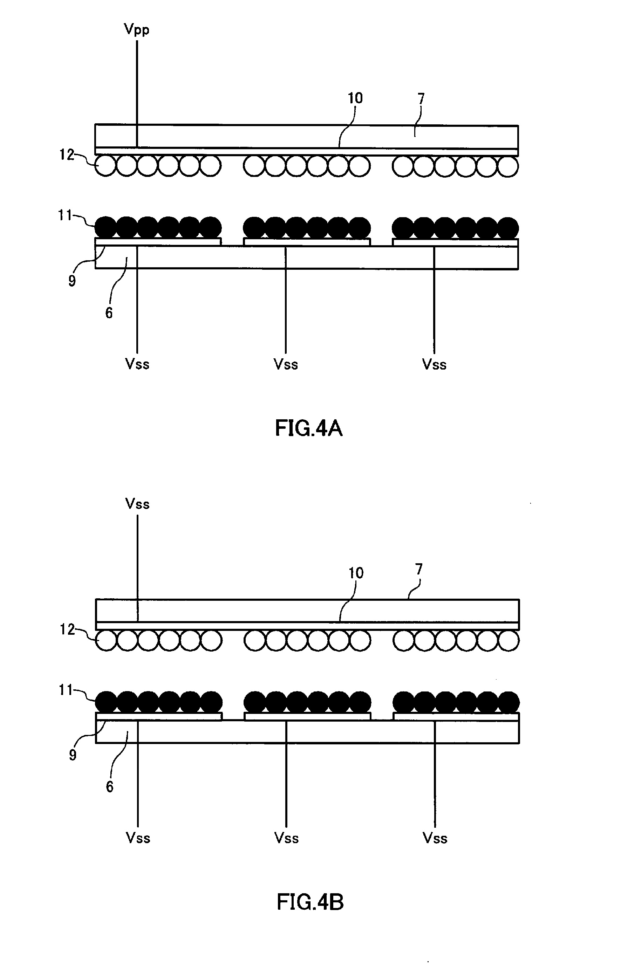

Next, operation of the electrophoresis display apparatus 1 according to the present embodiment during a writing and after a writing will be described using FIGs.3A and 3B. Here, the present embodiment will be described in comparison with a case where the common electrode and the pixel electrode are set to the same potential without resistances after a write operation as a comparative example. FIG.3 is an internal schematic view of the display section of the electrophoresis display apparatus during a writing and after a writing according to the present embodiment. FIG.4 is an internal schematic view of the display section of the electrophoresis display apparatus during a writing and after a writing according to a comparative example. As the write operation, a case will be described where white color particles are displayed on the display surface side of the display section 2.

In the electrophoresis display apparatus 1 according to the present embodiment, during a writing to the display section 2, the controller 4 gives an "L" level drive pulse to the gate input of the CMOS circuit 15 of the drive circuit 3a and gives an "H" level drive pulse to the gate input of the CMOS circuit 15 of the drive circuit 3b. In the CMOS circuit 15 of the drive circuit 3b that has received the "H" level pulse signal, the PMOS side is brought into conduction with the power supply Vpp and the write voltage Vpp is applied to the common electrode 10. In the CMOS circuit 15 of the drive circuit 3a that has received the "L" level pulse signal, the NMOS side is brought into conduction with the power supply Vss and the write voltage Vss is applied to the pixel electrode 9. In this case, since no signal is supplied to the connection transistors 16 of the drive circuit 3a and drive circuit 3b, the connection transistors 16 remain in an open state (high impedance (Hi-I) state) (FIG.3A). This causes the potential on the common electrode 10 side to become relatively higher, and therefore the color of the white color particles 12 is displayed on the display surface of the display section 2.

When the writing to the display section 2 is completed, the CMOS circuits 15 of the drive circuit 3a and the drive circuit 3b are driven to an open state (high impedance state), the controller 4 gives control signals for conduction to the gate inputs of the connection transistors 16 of the drive circuit 3a and the drive circuit 3b. This brings the connection transistors 16 into conduction, and therefore the power supply Vss is connected to the pixel electrode 9 and the common electrode 10 via the resistances 17 respectively (FIG.3B). Thus, after the application of a write pulse, the pixel electrode 9 and the common electrode 10 are connected together via the resistances 17, and it is thereby possible to minimize the occurrence of a kickback phenomenon and coagulation of charged particles, and suppress the degradation of contrast and display quality.

On the other hand, in the case of the electrophoresis display apparatus according to the comparative example, after a writing shown in FIG.4A, the output to the common electrode 10 and the pixel electrode 9 is intercepted and all the electrodes are set to the same potential (Vss) without passing through the resistances (FIG.4B). Thus, the common electrode 10 and the pixel electrode 9 are short-circuited, causing a kickback phenomenon and resulting in degradation of display quality such as contrast.

As described above, according to the present embodiment, after the application of a write pulse to the common electrode 10 and the pixel electrode 9, the pixel electrode 9 and the common electrode 10 are connected together via the resistances 17, and it is thereby possible to minimize the occurrence of a kickback phenomenon and coagulation of charged particles, and reduce degradation of contrast and display quality.

In the above-described embodiment, a writing for a white color display is performed with a voltage Vpp applied to the common electrode 10 and a voltage Vss applied to the pixel electrode 9, but a shaking pulse whereby the potentials of the common electrode 10 and the pixel electrode 9 are alternately inverted may also be applied before applying the write voltage. Furthermore, the write voltage may be applied continuously or intermittently. Furthermore, a case has been described in the above-described embodiment where a white color is displayed on the entire surface on the display surface side of the display section 2, but when a black color is displayed on only some of the pixel electrodes 9, the voltage Vpp may be applied to those pixel electrodes 9 and the voltage Vss may be applied to the remaining pixel electrodes 9 and the common electrode 10.

### (Example 1)

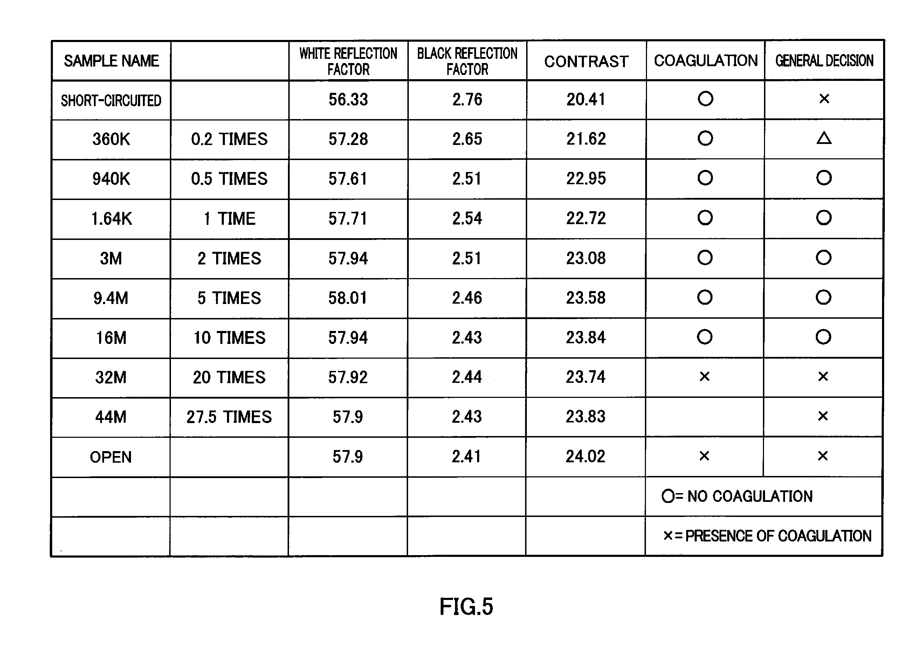

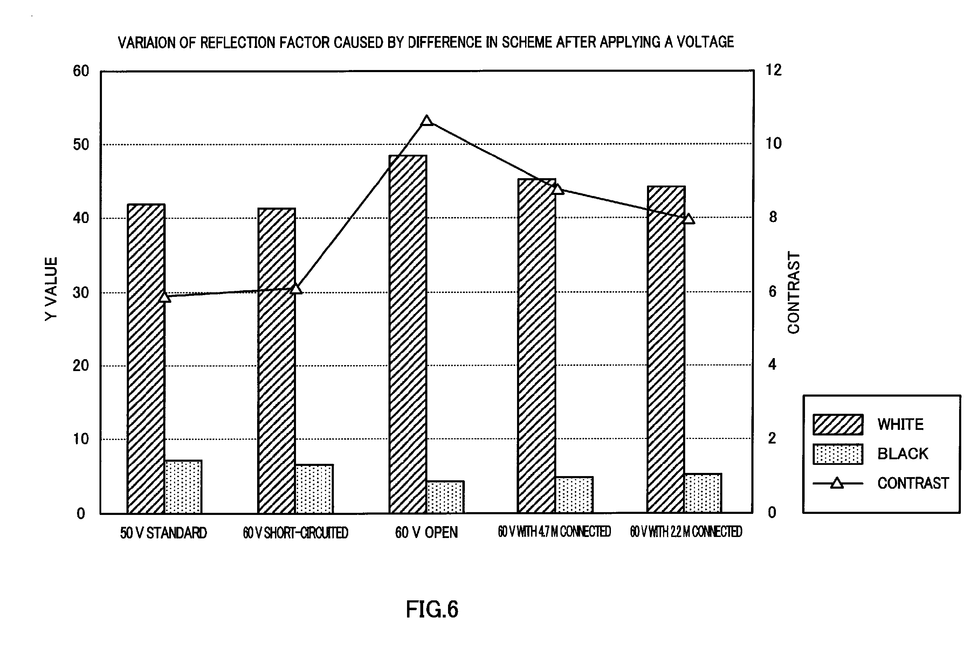

Next, an example of the electrophoresis display apparatus 1 to which the present invention is applied will be described. FIG.5 and FIG.6 are diagrams illustrating a white reflection factor, black reflection factor and contrast result after a write voltage is applied. FIG.5 illustrates a white reflection factor, black reflection factor and contrast, and the presence/absence of coagulation of charged particles caused by repeated screen switching and general decision result when the resistance value of the resistance 17 is changed. FIG.6 shows a reflection factor and contrast when pixels are driven with a potential difference of 60 V between the electrodes (a standard value with a potential difference of 50 V between the electrodes is shown for comparison), the electrodes are then short-circuited, left open and connected via a resistance.

In the present example, the electrophoresis display apparatus 1 of 45 mm × 52 mm was used, a PET was used for the element substrate 6 and the opposite substrate 7, and ITO was used for the pixel electrode 9 and the common electrode 10. Here, only one pixel of the pixel electrode 9 was presented. Furthermore, the gap between the pixel electrode 9 and the common electrode 10 was assumed to be 40 µm and the electrophoresis particles were assumed to have a white color and a black color. Since the volume resistivity of the electrophoresis display liquid 14 is approximately 1 × 10⁸Ωm, the resistance value of the electrophoresis display liquid 14 is 1.71MΩ.

After applying a voltage of 60 V to between the pixel electrode 9 and the common electrode 10 of this electrophoresis display apparatus 1, if both electrodes were connected together with 4.7MΩ or 2.2MΩ, the differences in the reflection factor from the case where the two electrodes were short-circuited and left open were as shown in FIG.6. As is clear from FIG.6, when the pixel electrode 9 and the common electrode 10 were connected together via the resistances 17, better contrast was obtained compared to the case where both electrodes are short-circuited although not excelling the case where the electrodes were left open. Since one resistance 17 is connected to each of both the pixel electrode 9 and the common electrode 10, the actual resistance values are 9.4MΩ (5.5 times the resistance value of the electrophoresis display liquid 14) and 4.4MΩ (2.5 times the resistance value of the electrophoresis display liquid 14). Furthermore, as shown in FIG.5, in the case where the two electrodes were left open, coagulation of charged particles occurred through repeated screen switching on the order of 600 times, but in the case where the two electrodes were connected together via the resistances 17, good contrast was shown even after repeated screen switching ten thousand times. Particularly, in the case of the resistance 17 having 0.5 to 10 times the resistance value of the electrophoresis display liquid 14, good results were obtained in all aspects of the white reflection factor, black reflection factor, contrast and coagulation.

When a DC voltage is applied to a dielectric in general, a current decreases with time, and therefore a value one minute after a voltage is applied is used for measuring practical volume resistivity of the electrophoresis display liquid 14 (see "Phenomenology of Dielectrics" published by the Institution of Electrical Engineers, p.205). The voltage application time in the actual electrophoresis display apparatus is several hundred msec and the absorption current of the dielectric is in a transient state, but the calculation of resistance of the electrophoresis display apparatus 1 shows the number of times the value one minute after the voltage application as a reference.

### (Second embodiment)

Next, a second embodiment of the present invention will be described. The electrophoresis display apparatus according to the second embodiment of the present invention is different from the electrophoresis display apparatus according to the first embodiment in that it drives and controls a display section (pixels) where pixels are arranged in a matrix form. Therefore, only differences will be particularly described and identical components will be assigned identical reference numerals and overlapping description thereof will be omitted.

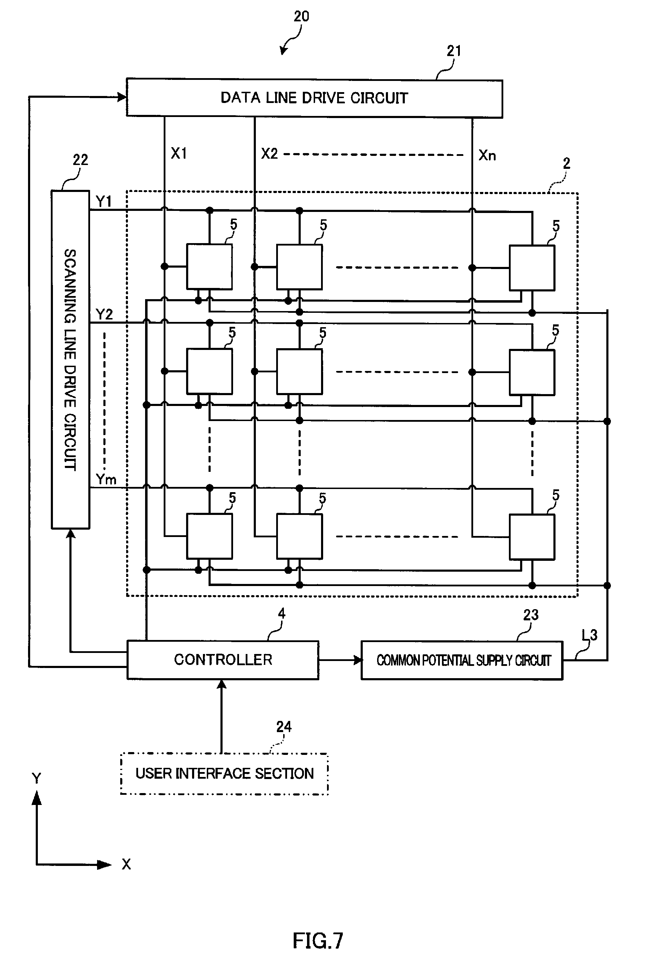

FIG.7 is an overall block diagram of the electrophoresis display apparatus according to the second embodiment of the present invention. The electrophoresis display apparatus 20 shown in FIG.7 is provided with a display section 2 in which pixels are arranged in a matrix form, a data line drive circuit 21 that supplies an image signal to the display section 2, a scanning line drive circuit 22 that supplies a scanning signal to the display section 2, a common potential supply circuit 23 that gives a common potential to each pixel of the display section 2, and a controller 4 that controls operation of the entire apparatus. The data line drive circuit 21, the scanning line drive circuit 22, the common potential supply circuit 23 and the controller 4 constitute drive control means.

The electrophoresis display apparatus 20 receives a request for image operation on a display image via a user interface section 24. Examples of the image operation include image scrolling on the display section 2, image zooming, paging that switches between display pages at a high speed or an arbitrary speed. The user interface section 24 converts image operation contents by the user to an image operation signal and supplies the signal to the controller 4.

In the display section 2, n data lines X1···Xn extend from the data line drive circuit 21 in parallel to the column direction (X direction) and m scanning lines Y1···Ym extend from the scanning line drive circuit 22 in parallel to the row direction (Y direction) so as to intersect with the data lines X1···Xn. In the display section 2, a pixel 5 is formed at each intersection where the data line (X1, X2, ···Xn) and the scanning line (Y1, Y2, ···Ym) intersect each other. A plurality of pixels 5 are arranged in the form of a matrix of mxn in the display section 2.

The data line drive circuit 21 supplies an image signal to the data lines X1, X2, ···Xn based on the timing signal supplied from the controller 4. The image signal takes a binary-like potential of high potential VH (e.g., 60 V) or low potential VL (e.g., 0 V). In the present embodiment, a low potential VL is supplied to a pixel 5 where a white color should be displayed and an image signal with a high potential VH is supplied to the pixel 5 where a black color should be displayed.

The scanning line drive circuit 22 sequentially supplies scanning signals to the scanning lines Y1, Y2, ···Ym based on timing signals supplied from the controller 4. A scanning signal is supplied to the pixel 5 to be driven.

A common potential Vcom is applied to each pixel 5 constituting the display section 2 from the common potential supply circuit 23 via a signal line (common potential line) L3. The common potential Vcom may be a constant potential or may change depending on gradation to be written. As will be described later, in the present embodiment, the same potential as the common potential Vcom is supplied to the pixel 5. This may also be realized by causing, for example, the common potential Vcom outputted from the common potential supply circuit 23 to have the same potential as a high potential VH or a low potential VL or by causing the data line drive circuit 21 to supply another potential identical to the common potential Vcom in addition to the high potential VH and low potential VL.

The controller 4 supplies a timing signal such as a drive pulse, clock signal or start pulse to the data line drive circuit 21, the scanning line drive circuit 22 and the common potential supply circuit 23 to control operation of each circuit. More specifically, the controller 4 repeatedly applies a write pulse of the same image to the pixel 5 before screen switching a predetermined number of times, and drives and controls the pixel 5 so as to perform a high contrast display. After the write operation, the controller 4 drives the data line drive circuit 21 to an open state and gives control signals to the gate inputs of the connection transistors 16 to bring them into conduction. This causes the Vcom to be connected to the pixel electrode 9 via the connection transistors 16 and the resistances 17. That is, after the write operation, the pixel electrode 9 and the common electrode 10 are connected to the common potential Vcom (e.g., low potential VL) via the resistances 17.

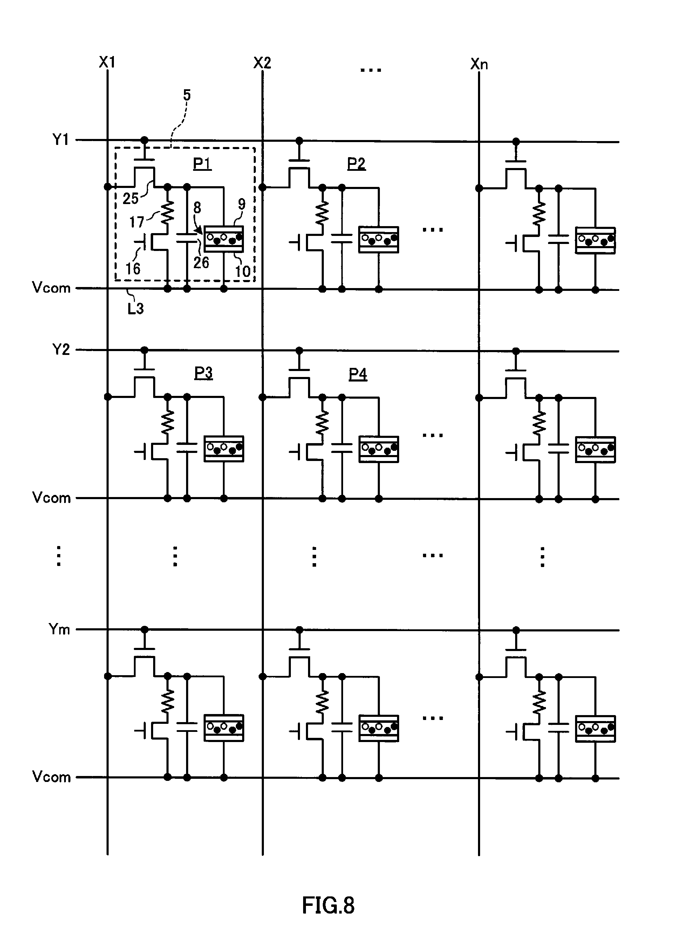

FIG.8 is an equivalent circuit diagram illustrating an electrical configuration of the pixel 5. Since the pixels 5 arranged on the display section 2 in a matrix form have an identical configuration, components constituting the pixels 5 will be described with common reference numerals assigned thereto.

The pixel 5 is provided with a pixel electrode 9, a common electrode 10, an electrophoresis element 8, a pixel switching transistor 25, and a retention capacitor 26. The pixel switching transistor 25 is comprised, for example, of an N-type transistor. The gate of the pixel switching transistor 25 is electrically connected to scanning lines (Y1, Y2, ···Ym) of the corresponding row. Furthermore, the source of the pixel switching transistor 25 is electrically connected to data lines (X1, X2, ···Xm) of the corresponding column. The drain of the pixel switching transistor 25 is electrically connected to the pixel electrode 9 and the retention capacitor 26. The pixel switching transistor 25 outputs image signals supplied from the data line drive circuit 21 via the data lines X1, X2, ···Xm to the pixel electrode 9 and the retention capacitor 26 at timings corresponding to scanning signals supplied like pulses from the scanning line drive circuit 22 via the scanning lines (Y1, Y2, ···Ym) of the corresponding row.

Image signals are supplied to the pixel electrode 9 from the data line drive circuit 21 via the data lines X1, X2, ···Xm and the pixel switching transistor 25. The pixel electrode 9 is arranged so as to face the common electrode 10 via the electrophoresis element 8. Furthermore, the pixel electrode 9 is connected to the drain of the connection transistor 16 via the resistance 17 and the source of the connection transistor 16 is configured to be electrically connectable to the common electrode 10. The gate of the connection transistor 16 is connected to the controller 4, receives a control signal from the controller 4 after a writing, and the pixel electrode 9 and the common electrode 10 are electrically connected via the resistance 17. The common electrode 10 is electrically connected to the signal line L3 to which the common potential Vcom is supplied.

The retention capacitor 26 is made up of a pair of electrodes arranged opposite to each other via a dielectric film, one electrode of which is electrically connected to the pixel electrode 9 and the pixel switching transistor 25 and the other electrode of which is electrically connected to the signal line L3. The retention capacitor 26 can retain an image signal for a predetermined period.

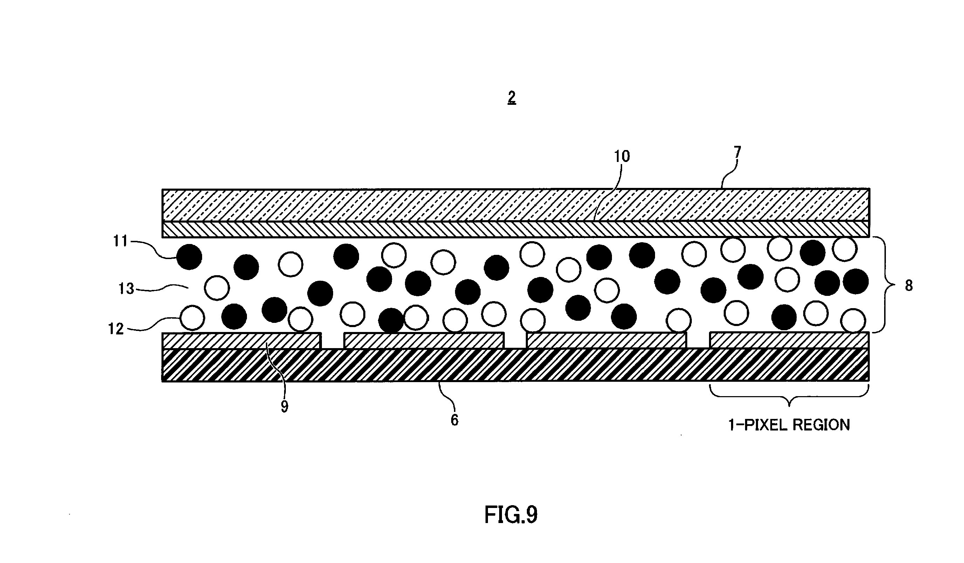

FIG.9 is a partial cross-sectional view of the display section 2 in the electrophoresis display apparatus 20. The display section 2 includes an element substrate 6 and an opposite substrate 7 arranged opposite to each other via a spacer (not shown), and an electrophoresis element 8 is sealed in between the substrates. The element substrate 6 is a substrate made of, for example, glass or plastic. A laminated structure in which the pixel switching transistor 25, the retention capacitor 26, the scanning line (one of Y, Y2, ··· Ym), the data line (one of X1, X2, ···Xn), the data line X or the like are built is formed on the element substrate 6. A plurality of pixel electrodes 9 are provided in a matrix form on an upper layer of this laminated structure.

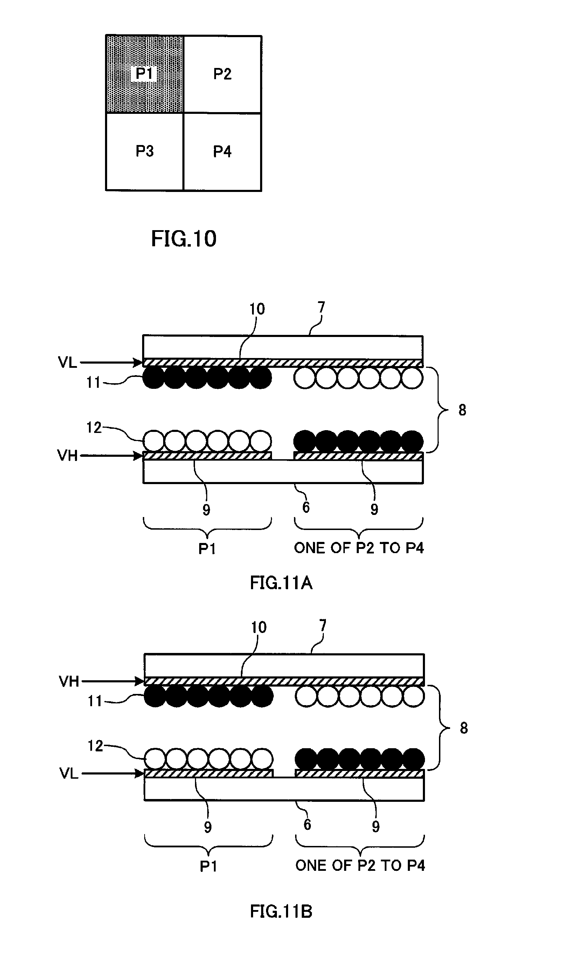

Next, a drive method suitably applicable to the electrophoresis display apparatus 20 configured as shown above will be described. For simplicity of description, the drive method will be described assuming that the display section 2 has a pixel arrangement of 4 pixels P1 to P4 in 2 rows and 2 columns shown in FIG.10.

Driving by a write pulse is performed as follows. As shown in FIG.10, a case will be described where only the pixel P1 at the first row and the first column is displayed in a black color and the other pixels P2 to P4 are displayed in a white color.

First, one black color display pulse is applied. As shown in FIG.11A, this can be realized by applying a low potential VL to the signal line L3 and data line X2, applying a high potential VH to the data line X1, and then selecting the scanning line Y1 for a predetermined time, applying a low potential VL to the signal line L3, data lines X1 and X2 and selecting the scanning line Y2. The time during which the scanning line is selected is, for example, around 0.1 msec.

Next, one white color display pulse is applied. As shown in FIG.11B, this can be realized by applying a high potential VH to the signal line L3 and data line X1, and applying a low potential VL to the data line X2, selecting the time scanning line Y1 for a predetermined time, and then applying a high potential VH to the signal line L3 and applying a low potential VL to the data lines X1 and X2 and selecting the scanning line Y2 for a predetermined time.

Assuming such one black color display pulse and one white color display pulse as one set, this set is repeatedly applied a predetermined number of times (e.g., 30 times), then the connection transistor 16 is brought into conduction, and all the pixel electrodes 9 are connected to the common electrode 10 via the resistances 17 and the signal line L3. In this way, after the application of a write pulse, the pixel electrodes 9 and the common electrode 10 are electrically connected via the resistances 17, and it is thereby possible to minimize the occurrence of a kickback phenomenon and coagulation of charged particles, suppress degradation of contrast and display quality, and stabilize a high contrast display.

### (Third embodiment)

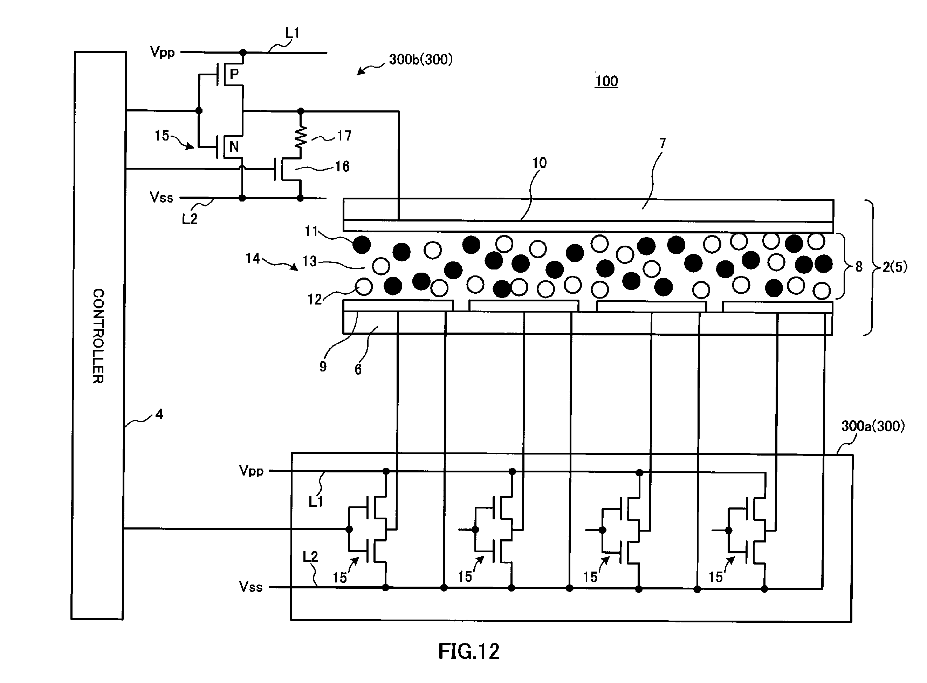

FIG.12 is a schematic view illustrating an overall configuration of an electrophoresis display apparatus according to a third embodiment of the present invention. Components identical to those of the electrophoresis display apparatus shown in FIG.1 are assigned the same reference numerals and overlapping descriptions will be omitted. The electrophoresis display apparatus 100 according to the third embodiment is provided with a display section 2, a drive circuit 300 that drives the display section 2 and a controller 4 that controls operation of the entire apparatus.

The drive circuit 300 drives and controls the display section 2 based on a timing signal (drive pulse, clock or the like) supplied from the controller 4. The drive circuit 300 can be configured of a high-voltage driver such as a VFD driver or PDP driver. However, it is also naturally possible to constitute the drive circuit 300 using a switching element such as an FET and bipolar transistor, and it is also possible to constitute the circuit using, for example, a non-contact relay.

This drive circuit 300 is provided with a drive circuit 300a that drives and controls the pixel electrode 9 and a drive circuit 300b that drives and controls the common electrode 10. The drive circuit 300a is provided for each pixel electrode 9 and one drive circuit 300b is provided for the common electrode 10.

The drive circuit 300a has a plurality of CMOS circuits 15 provided in correspondence with respective pixel electrodes 9. The CMOS circuit 15 has a configuration in which two electric field effect transistors having different characteristics of P-channel MOS FET (hereinafter referred to as "PMOS") and N-channel MOS FET (hereinafter referred to as "NMOS") are connected so as to complement each other's characteristics. In each CMOS circuit 15, the gates of the PMOS and NMOS are connected to drive pulse output terminals of the controller 4 so that drive pulses which are input voltages are applied thereto and the drains of the PMOS and NMOS are connected to the corresponding pixel electrodes 9. The source of the PMOS of the pair of FETs constituting the CMOS circuit 15 is connected to a power supply Vpp (e.g., 50 V) via a signal line L1, and the source of the NMOS is connected to a power supply Vss (e.g., 0 V) via a signal line (potential line) L2.

In the plurality of CMOS circuits 15 constituting the drive circuit 300a, during a write operation to corresponding pixels, the controller 4 gives a drive pulse different in level from a pulse given to the drive circuit 300b to the gate input of the CMOS circuit 15 (PMOS and NMOS). To be more specific, when the controller 4 inputs an "H" level drive pulse to the gate input of the CMOS circuit 15, the PMOS turns ON and the NMOS turns OFF, and the power supply Vpp is applied to the pixel electrode 9 via the PMOS. Since control is performed such that the potential on the pixel electrode 9 side becomes higher relative to the common electrode 10, the color of this black color particles 11 is displayed on the display surface of the display section 2. On the other hand, when the controller 4 inputs an "L" level drive pulse to the gate input of the CMOS circuit 15, the PMOS turns OFF and the NMOS turns ON, and the power supply Vss is applied to the pixel electrode 9 via the NMOS. As will be described later, since the potential on the pixel electrode 9 side becomes lower relative to the common electrode 10, the color of this white color particles 12 is displayed on the display surface of the display section 2.

On the other hand, the drive circuit 300b connected to the common electrode 10 includes a CMOS circuit 15, a connection transistor 16 and a resistance 17. In the drive circuit 300b, the gate input of the CMOS circuit 15 (PMOS and NMOS) is connected to a different drive pulse output terminal of the controller 4 so as to be able to apply a drive pulse aside from the drive circuit 300a. The drain of the CMOS circuit 15 is connected to the common electrode 10. Furthermore, in the CMOS circuit 15, the source of the PMOS is connected to a power supply Vpp via a signal line L1 and the source of the NMOS is connected to a power supply Vss via a signal line L2.

In the CMOS circuit 15 of the drive circuit 300b, the controller 4 gives a drive pulse different in level from the drive pulse given to the drive circuit 300a to the gate input of the CMOS circuit 15 during a write operation. To be more specific, when the controller 4 inputs an "H" level drive pulse to the gate input of the CMOS circuit 15 of the drive circuit 300b, the PMOS turns ON and the NMOS turns OFF, and the power supply Vpp is applied to the common electrode 10. As will be described later, if control is performed such that the potential on the common electrode 10 side becomes higher relative to the pixel electrode 9, the color of this white color particles 12 is displayed on the display surface of the display section 2. On the other hand, when the controller 4 inputs an "L" level drive pulse to the gate input of the CMOS circuit 15 of the drive circuit 300b, the NMOS turns ON and the PMOS turns OFF, and the power supply Vss is applied to the common electrode 10. As will be described later, if control is performed such that the potential on the common electrode 10 side becomes lower relative to the pixel electrode 9, the color of this black color particles 11 is displayed on the display surface of the display section 2.

The gate of the connection transistor 16 of the drive circuit 300b is connected to a different drive pulse output terminal of the controller 4 so as to be able to apply a different drive pulse aside from the CMOS circuit 15. Furthermore, the drain of the connection transistor 16 is connected to the input of the common electrode 10 via the resistance 17 and the source is connected to the power supply Vss via the signal line L2. After a write operation, the controller 4 gives a control signal to the gate input, whereby the connection transistor 16 is brought into conduction, and the power supply Vss is connected to the common electrode 10 via the resistance 17.

The controller 4 supplies timing signals such as clock signal, drive pulse to the drive circuit 300a and the drive circuit 300b to control operations of the respective circuits. More specifically, during a write operation, the controller 4 drives the connection transistor 16 of the drive circuit 300b to an open state and gives drive pulses differing in level ("H" or "L" level) to the gate inputs of the CMOS circuits 15 of the drive circuit 300a and the drive circuit 300b and applies a write voltage to the pixel electrode 9 and the common electrode 10. On the other hand, after the write operation, the controller 4 drives the CMOS circuits 15 of the drive circuit 300a and the drive circuit 300b to an open state and gives a control signal to the gate input of the connection transistor 16 of the drive circuit 300b to perform an on operation so that the power supply Vss is connected to the common electrode 10 via the resistance 17. That is, after the write operation, control is performed such that the common electrode 10 and the pixel electrode 9 are connected to the same fixed potential (Vss) via the resistance 17.

Here, in the aspects of a white reflection factor, black reflection factor, contrast and presence/absence of coagulation, the resistance value of the resistance 17 is preferably 0.5 to 10 times or particularly 2 to 6 times the resistance value of the electrophoresis display liquid (liquid body) 14 for the area corresponding to the pixel 5.

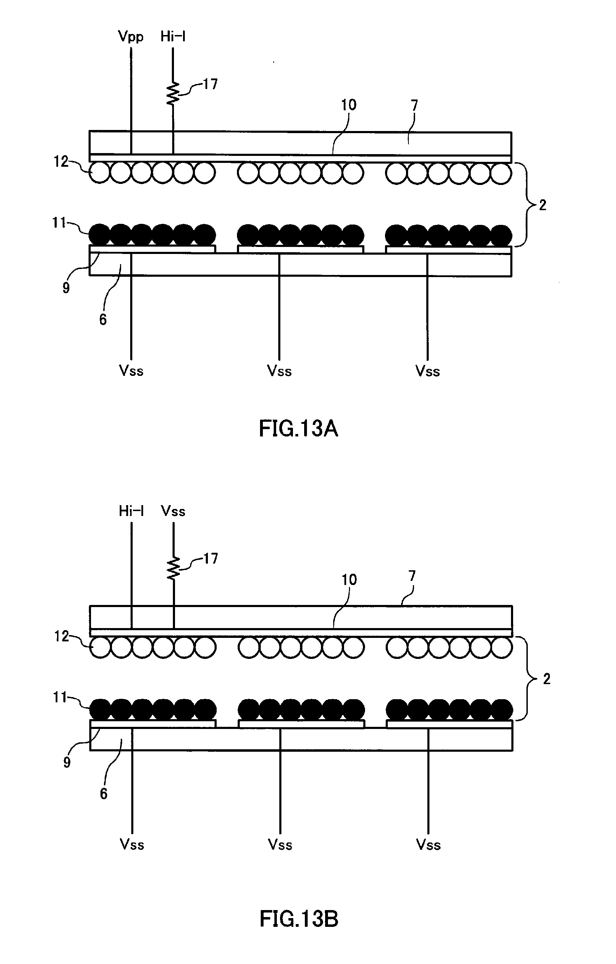

Next, operations of the electrophoresis display apparatus 100 according to the present embodiment during a writing and after a writing will be described with reference to FIG.13. FIG.13 is an internal schematic view of the display section during a writing and after a writing of the electrophoresis display apparatus 100 according to the present embodiment. As the write operation, a case will be described as an example where white color particles are displayed on the display surface side of the display section 2.

In the electrophoresis display apparatus 100 according to the present embodiment, during a writing to the display section 2, the controller 4 gives an "H" level drive pulse to the gate input of the CMOS circuit 15 of the drive circuit 300a and gives an "L" level drive pulse to the gate input of the CMOS circuit 15 of the drive circuit 300b.

On the pixel electrode side, in the CMOS circuit 15 of the drive circuit 300a that has received the "L" level drive pulse, the PMOS turns OFF and the NMOS turns ON, and the power supply Vss is applied to the pixel electrode 9 via the NMOS.

On the other hand, on the common electrode side, in the CMOS circuit 15 of the drive circuit 300b that has received the "H" level drive pulse, the PMOS turns ON and the NMOS turns OFF, and the power supply Vpp is applied to the common electrode 10 via the PMOS. In this case, since no control signal is supplied to the connection transistor 16 of the drive circuit 300b, the connection transistor 16 remains in an open state (high impedance (Hi-I) state) (FIG.13A). This cause the potential on the common electrode 10 side to become relatively higher, the color of the white color particles 12 is displayed on the display surface of the display section 2.

When the writing to the display section 2 is completed, the CMOS circuits 15 of the drive circuit 300a and the drive circuit 300b are driven to an open state (high impedance state), the controller 4 gives a control signal to the gate input of the connection transistor 16 of the drive circuit 300b, and the connection transistor 16 is driven to an ON state. Thus, the power supply Vss is connected to the common electrode 10 via the connection transistor 16 and resistance 17, and the common electrode 10 becomes the same potential as the pixel electrode 9 to which the voltage Vss is applied (FIG.13B). Thus, after the application of the write pulse, the pixel electrode 9 and the common electrode 10 are connected together via the resistance 17, and it is thereby possible to minimize the occurrence of a kickback phenomenon and coagulation of charged particles, and suppress degradation of contrast and display quality.

As described above, according to the present embodiment, the pixel electrode 9 and the common electrode 10 are connected together via the resistance 17 after application of a write pulse to the common electrode 10 and the pixel electrode 9, and it is thereby possible to minimize the occurrence of a kickback phenomenon and coagulation of charged particles, and suppress degradation of contrast and display quality.

In the above embodiment, a voltage Vpp is applied to the common electrode 10 and a voltage Vss is applied to the pixel electrode 9 to perform a write operation, but before the application of a write voltage, a shaking pulse may also be applied whereby the potentials of the common electrode 10 and the pixel electrode 9 are alternately inverted. Furthermore, the write voltage may be applied continuously or intermittently. Furthermore, a case has been described in the above embodiment as an example where a white color is fully displayed on the display surface side of the display section 2, but when a black color display is applied to only some of the pixel electrodes 9, the voltage Vpp may be applied to those pixel electrodes 9 and the voltage Vss may be applied to the remaining pixel electrodes 9 and the common electrodes 10.

### (Example 2)

An evaluation test was conducted on a white reflection factor, black reflection factor and contrast after a write voltage is applied using the electrophoresis display apparatus 100 according to the third embodiment. The white reflection factor, black reflection factor and contrast when the resistance value of the resistance 17 is changed, and the presence/absence of coagulation of charged particles caused by repeated screen switching and a general decision result were the same as those shown in FIG.5 and FIG.6.

### (Fourth embodiment)

Next, a fourth embodiment of the present invention will be described. An electrophoresis display apparatus according to the fourth embodiment of the present invention is different from the aforementioned electrophoresis display apparatus according to the third embodiment in that it drives and controls the display section (pixels) in which pixels are arranged in a matrix form. Therefore, only differences will be particularly described and identical components will be assigned identical reference numerals and overlapping description thereof will be omitted.

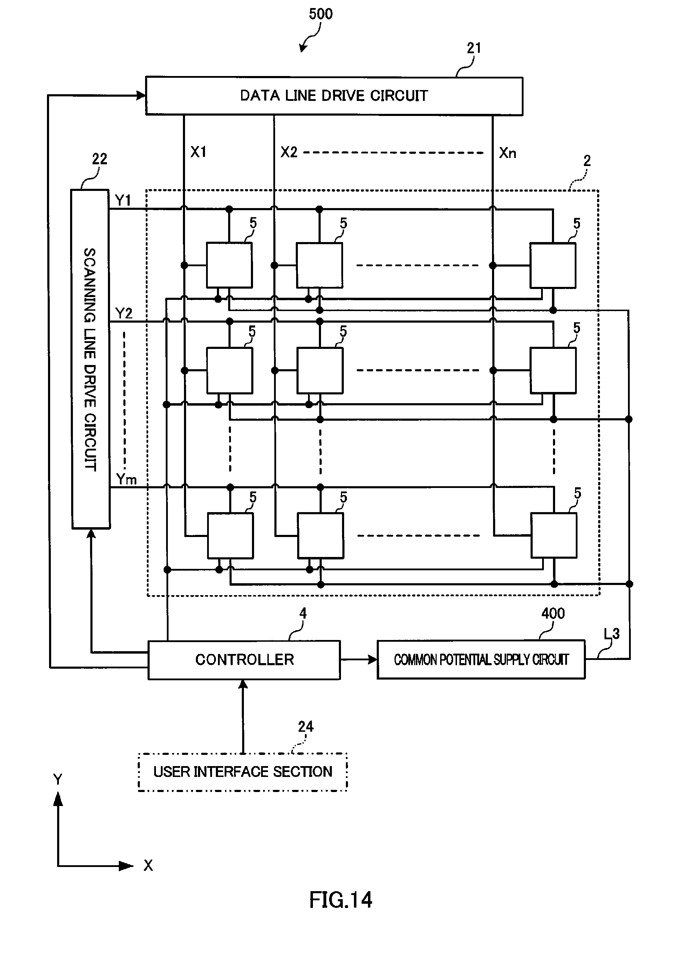

FIG.14 is an overall block diagram of the electrophoresis display apparatus according to the fourth embodiment of the present invention. The electrophoresis display apparatus 500 shown in FIG.14 is provided with a display section 2 in which pixels are arranged in a matrix form, a data line drive circuit 21 that supplies an image signal to the display section 2, a scanning line drive circuit 22 that supplies a scanning signal to the display section 2, a common potential supply circuit 400 that gives a common potential to each pixel of the display section 2, and a controller 4 that controls operation of the entire apparatus. The data line drive circuit 21, the scanning line drive circuit 22, the common potential supply circuit 400 and the controller 4 constitute drive control means. The common potential supply circuit 400 is configured similarly to the drive system "A" (see FIG.2) including the drive circuit 300b and the resistance 17.

The electrophoresis display apparatus 500 receives a request for image operation on a display image via a user interface section 24. Examples of the image operation include scrolling of an image on the display section 2, zooming of an image or paging to switch display pages at a high speed or at an arbitrary speed. The user interface section 24 converts image operation contents to an image operation signal and supplies the image operation signal to the controller 4.

In the display section 2, n data lines X1 to Xn extend from the data line drive circuit 21 in parallel to the column direction (X direction) and m scanning lines Y1 to Ym extend from the scanning line drive circuit 22 in parallel to the row direction (Y direction) so as to intersect with these data lines X1 to Xn. In the display section 2, a pixel 5 which becomes a pixel is formed at each intersection where the data line (X1, X2, ···Xn) and the scanning line (Y1, Y2, ···Ym) intersect with each other. Thus, a plurality of pixels 5 are formed in the form of a matrix of mxn in the display section 2.

The data line drive circuit 21 supplies an image signal to the data lines X1, X2, ···Xn based on a timing signal supplied from the controller 4. The image signal takes a binary-like potential of high potential VH (e.g., 60 V) or low potential VL (e.g., 0 V). In the present embodiment, a low potential VL is supplied to the pixel 5 where a white color should be displayed and an image signal with a high potential VH is supplied to the pixel 5 where a black color should be displayed.

The scanning line drive circuit 22 sequentially supplies scanning signals to the scanning lines Y1, Y2, ···Ym based on timing signals supplied from the controller 4. Scanning signals are supplied to the pixels 5 to be driven.

A common potential Vcom is applied to each pixel 5 constituting the display section 2 from the common potential supply circuit 400 via a signal line (common potential line) L3. The common potential Vcom is equivalent to a power supply Vss or Vpp applied to the common electrode 10 at the time of a writing. The common potential Vcom may have a constant potential or may change depending on gradation to be written. As will be described later, in the present embodiment, the same potential as the common potential Vcom is supplied to the pixel 5. This may also be realized by causing, for example, the common potential Vcom outputted from the common potential supply circuit 400 to have the same potential as a high potential VH (Vpp) or a low potential VL (Vss) or by causing the data line drive circuit 21 to supply another potential identical to the common potential Vcom in addition to the high potential VH and low potential VL.

The controller 4 supplies a timing signal such as a clock signal or drive pulse to the data line drive circuit 21, the scanning line drive circuit 22 and the common potential supply circuit 400 to control operation of each circuit. More specifically, the controller 4, before screen switching, repeatedly applies a write pulse (drive pulse) of the same image to the pixel 5 a predetermined number of times and drives and controls the pixel 5 so as to perform high contrast display. After the write operation, the controller 4 drives the data line drive circuit 21 to an open state and gives control signals to the gate inputs of the connection transistors 16 to turn them ON and connects the common potential line L3 to the pixel electrode 9 via the connection transistor 16 and the resistance 17. That is, after the write operation, the pixel electrode 9 and the common electrode 10 are connected together via the resistance 17.

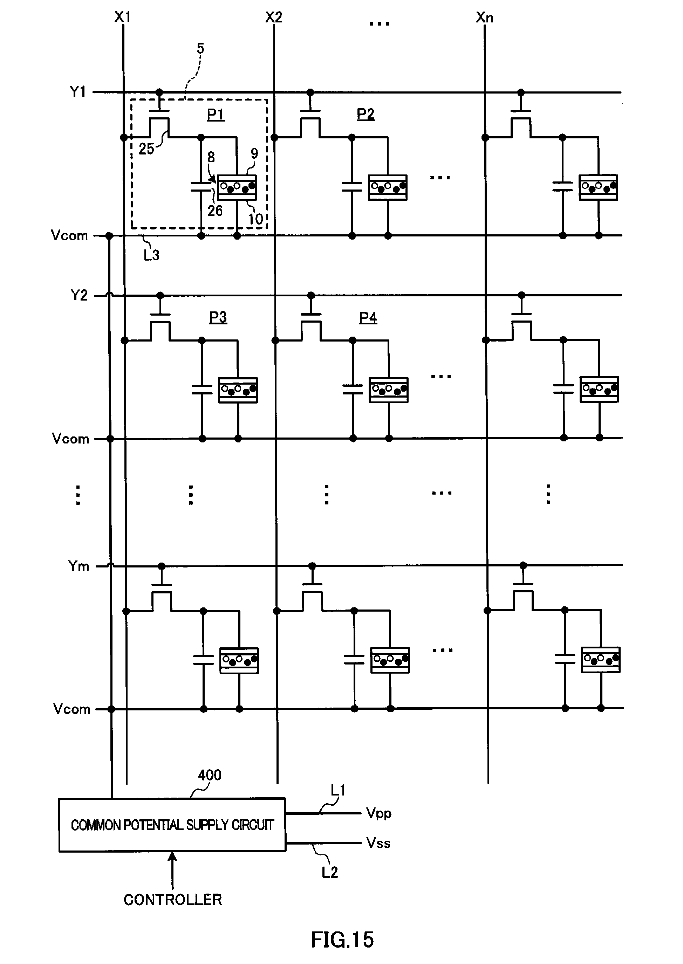

FIG.15 is an equivalent circuit diagram illustrating an electrical configuration of the pixels 5. Since the pixels 5 arranged on the display section 2 in a matrix form have an identical configuration, components constituting the pixels 5 will be described with common reference numerals assigned thereto.

The pixel 5 is provided with a pixel electrode 9, a common electrode 10, an electrophoresis element 8, a pixel switching transistor 25, and a retention capacitor 26. The pixel switching transistor 25 is comprised, for example, of an N-type transistor. The gate of the pixel switching transistor 25 is electrically connected to scanning lines (Y1, Y2, ···Ym) of the corresponding row. Furthermore, the source of the pixel switching transistor 25 is electrically connected to data lines (X1, X2, ···Xm) of the corresponding column. The drain of the pixel switching transistor 25 is electrically connected to the pixel electrode 9 and the retention capacitor 26. The pixel switching transistor 25 outputs image signals supplied from the data line drive circuit 21 via the data lines X1, X2, ···Xm to the pixel electrode 9 and the retention capacitor 26 at timings corresponding to scanning signals supplied like pulses from the scanning line drive circuit 22 via the scanning lines (Y1, Y2, ···Ym) of the corresponding row.

Image signals are supplied to the pixel electrode 9 from the data line drive circuit 21 via the data lines X1, X2, ···Xm and the pixel switching transistor 25. The pixel electrode 9 is arranged so as to face the common electrode 10 via the electrophoresis element 8.

The common electrode 10 is electrically connected to the signal line L3 to which a common potential Vcom is supplied. As described above, the common potential supply circuit 400 has the same configuration as the drive circuit 300b shown in FIG.2 and applies a high potential VH (Vpp) or low potential VL (Vss) to the signal line L3 as the common potential Vcom.

The retention capacitor 26 is made up of a pair of electrodes arranged opposite to each other via a dielectric film. One electrode thereof is electrically connected to the pixel electrode 9 and the pixel switching transistor 25 and the other electrode is electrically connected to the signal line L3. The retention capacitor 26 allows an image signal to be retained for a certain period. The cross-sectional structure of the display section 2 is identical to the structure of the display section shown in FIG.9.

A drive method suitable for the electrophoresis display apparatus 500 configured as shown above will be described. The drive method will be described assuming that the pixel arrangement is the one shown in FIG.10 with 4 pixels P1 to P4 in 2 rows and 2 columns.

Driving by a write pulse is performed as follows. As shown in FIG.10, a case will be described where only the pixel P1 at the first row and the first column is displayed in a black color and the other pixels P2 to P4 are displayed in a white color.

First, one black color display pulse is applied. As shown in FIG.11A, this can be realized by applying a low potential VL to the signal line L3 and the data line X2, applying a high potential VH to the data line X1, and then selecting the scanning line Y1 for a predetermined time, applying a low potential VL to the signal line L3, the data lines X1 and X2 and selecting the scanning line Y2. The time during which the scanning line is selected is, for example, around 0.1 msec.

Next, one white color display pulse is applied. As shown in FIG. 11B, this can be realized by applying a high potential VH to the signal line L3 and the data line X1, and applying a low potential VL to the data line X2, selecting the time scanning line Y1 for a predetermined time, and then applying a high potential VH to the signal line L3 and applying a low potential VL to the data lines X1 and X2 and selecting the scanning line Y2 for a predetermined time.

Assuming such one black color display pulse and one white color display pulse as one set, this set is repeated a predetermined number of times (e.g., 30 times), then the connection transistor 16 of the common potential supply circuit 400 is brought into conduction, and the entire common electrode 10 is connected to the common potential Vcom via the resistance 17 and the signal line L3. In this case, the high potential VH or low potential VL having the same potential as the common potential Vcom is applied to each pixel electrode 9. In this way, after the application of a write pulse, the pixel electrode 9 and the common electrode 10 are electrically connected via the resistance 17, and it is thereby possible to minimize the occurrence of a kickback phenomenon and coagulation of charged particles, suppress degradation of contrast and display quality, and stabilize a high contrast display.

In the present embodiment, a voltage is applied using a method called "common shaking" after all but it is also naturally possible to adopt a method whereby a potential difference is relatively provided for the data lines using the signal line L3 as a common potential Vcom.

The present application is based on Japanese Patent Application No.2010-159907 filed on July 14, 2010 and Japanese Patent Application No.2011-150321 filed on July 6, 2011, entire content of which is expressly incorporated by reference herein.

## Claims

1. An electrophoresis display apparatus, comprising:
a pair of substrates arranged opposite to each other via a space, at least one of which has optical transparency;
a plurality of pixel electrodes formed on a substrate surface of one of the pair of substrates;
one or a plurality of common electrodes formed opposite to the plurality of pixel electrodes on the substrate surface of the other of the pair of substrates;
a liquid body composed of two types of dispersed charged particles differing in color and polarity sealed in between the pair of substrates; and
a drive control circuit that generates a write pulse producing a potential difference that causes the charged particles to move between the pixel electrode and the common electrode, wherein:
after applying a write pulse to the pixel electrode and the common electrode, the drive control circuit connects the pixel electrode and the common electrode via a resistance.

2. The electrophoresis display apparatus according to claim 1, wherein the resistance value of the resistance is 0.5 times to 10 times the resistance value of the liquid body.

3. The electrophoresis display apparatus according to claim 1, wherein:
the drive control circuit comprises:
a controller that supplies drive pulses of different voltage levels to the pixel electrode and the common electrode;
a first drive circuit provided for each of the pixel electrodes;
a second drive circuit provided for one or a plurality of the common electrodes; and
a plurality of the resistances provided for each of the pixel electrodes and the common electrode, wherein:
the pixel electrode and the common electrode are connected to voltage sources of different potentials via the first and second drive circuits during a writing, and
the first and second drive circuits connect the each pixel electrode and the common electrode to a same voltage source via the resistance after the writing.

4. The electrophoresis display apparatus according to claim 3, wherein:
the first drive circuit comprises:
a first CMOS circuit, a gate of which is connected to a first terminal that outputs a drive pulse of the controller, a drain of which is connected to a corresponding pixel electrode, one source of which is connected to a first voltage source, and the other source is connected to a second voltage source; and
a first switch, one end of which is connected to an end of a resistance whose other end is connected to the pixel electrode, the other end of which is connected to the first or second voltage source, and an ON/OFF control terminal of which is connected to the controller,
the second drive circuit comprises:
a second CMOS circuit, a gate of which is connected to a second terminal that outputs a drive pulse of the controller, a drain of which is connected to a corresponding common electrode, one source of which is connected to the first voltage source, and the other source is connected to the second voltage source; and
a second switch, one end of which is connected to an end of a resistance whose other end is connected to the common electrode, the other end of which is connected to the first or second voltage source, and an ON/OFF control terminal of which is connected to the controller.

5. The electrophoresis display apparatus according to claim 1, wherein:
the drive control circuit comprises:
a controller that supplies drive pulses of different voltage levels to the pixel electrode and the common electrode;
a first drive circuit provided for each of the pixel electrodes;
a second drive circuit provided for the common electrode; and
the resistance provided for the common electrode, wherein:
the pixel electrode and the common electrode are connected to voltage sources of different potentials via the first and second drive circuits during a writing, and
the second drive circuit connects the common electrode to the same voltage source as the pixel electrode via the resistance after the writing.

6. The electrophoresis display apparatus according to claim 5, wherein:
the first drive circuit comprises a first CMOS circuit for each pixel electrode, a gate of which is connected to a first terminal that outputs a drive pulse of the controller, a drain of which is connected to a corresponding pixel electrode, one source of which is connected to a first voltage source and the other source of which is connected to a second voltage source,
the second drive circuit comprises:
a second CMOS circuit, a gate of which is connected to a second terminal that outputs a drive pulse of the controller, a drain of which is connected to a corresponding common electrode, one source of which is connected to the first voltage source and the other source of which is connected to the second voltage source; and
a second switch, one end of which is connected to an end of the resistance whose other end is connected to the common electrode, the other end of which is connected to the second voltage source, and an ON/OFF control terminal of which is connected to the controller.

7. A method for driving an electrophoresis display apparatus, the apparatus comprising:
a pair of substrates arranged opposite to each other via a space, at least one of which has optical transparency;
a plurality of pixel electrodes formed on a substrate surface of one of the pair of substrates;
a common electrode formed opposite to the plurality of pixel electrodes on the substrate surface of the other of the pair of substrates;
a liquid body composed of two types of dispersed charged particles differing in color and polarity sealed in between the pair of substrates; and
a drive control circuit that generates a write pulse producing a potential difference that causes the charged particles to move between the pixel electrode and the common electrode;
wherein after applying a write pulse to the pixel electrode and the common electrode, the pixel electrode and the common electrode are connected together via a resistance.
